# EUROPÄISCHE PATENTSCHRIFT

(11) **EP 0 360 099 B1**
(45) Veröffentlichungstag und Bekanntmachung des Hinweises auf die Patenterteilung: **11.01.1995**
(21) Anmeldenummer: 89116666.2
(22) Anmeldetag: 08.09.1989
(51) Int. Cl.: H02P 8/00, G05B 19/40

(54) **Verfahren und Anordnung zum Erzeugen von Steuerimpulsen für Schrittmotoren**
Method and device for generating control pulses for stepper motors
Procédé et dispositif pour générer des impulsions de commande pour moteurs pas à pas

(30) Priorität: 22.09.1988 DE 3832258
(43) Veröffentlichungstag der Anmeldung: 28.03.1990
(73) Patentinhaber: SIEMENS AKTIENGESELLSCHAFT, 80333 München (DE)
(72) Erfinder: Kühlers, Jürgen, Dipl.-Ing., D-7553 Muggensturm (DE); Künzler, Edmund, D-7516 Karlsbad-Mutschelbach (DE)

(56) Entgegenhaltungen:
- DE-A- 2 238 613
- DE-A- 2 625 397
- DE-B- 2 721 240

## Beschreibung

Für den Antrieb von Stellgliedern werden häufig Schrittmotoren eingesetzt, da diese die ihnen zugeführten Steuerimpulse in Wegstrecken oder Winkel umsetzen und daher eine genaue Positionierung durch Zufuhr einer bestimmten Anzahl von Impulsen möglich ist, ohne daß ein geschlossener Regelkreis erforderlich ist. Man benötigt lediglich eine Steuerkette, bestehend aus einer Impulserzeugereinheit, einem Leistungsteil und einer Antriebseinheit mit dem Schrittmotor. An den Enden des Verfahrbereichs der Antriebseinheit sind im allgemeinen je ein Endschalter und ein Notendschalter angebracht, deren Abstand als Bremsweg zur Verfügung steht. Zusätzlich können noch Referenzpunktschalter zum Kalibrieren des Verfahrweges vorgesehen sein.

Zum genauen Positionieren muß jeder Steuerimpuls verarbeitet werden. Hierzu ist unter anderem Voraussetzung, daß sich die Impulsfrequenz nicht zu schnell ändert, d. h., der Schrittmotor darf nicht zu rasch hochgefahren oder abgebremst werden. Demgemäß muß die Frequenz der Ansteuerimpulse einen bestimmten Zeitverlauf einhalten. Dieser Verlauf setzt sich zusammen aus den Phasen Beschleunigung, konstante Geschwindigkeit und Verzögerung. Im allgemeinen gibt es noch eine Startfrequenz, auf welche beim Starten die Frequenz von Null springen kann, ohne daß ein Impuls verlorengeht, und eine Stoppfrequenz, von der die Frequenz beim Abbremsen unmittelbar auf Null geht, wodurch der Motor sofort zum Stehen gebracht wird. Weiterhin müssen Kriterien, wie minimale Breite der Ansteuerimpulse, maximale Impulsfrequenz, berücksichtigt werden.

Es wurden Schrittmotorsteuerungen vorgeschlagen, die das erforderliche Frequenzzeitprofil der Ansteuerimpulse mittels eines spannungsgesteuerten Oszillators erzeugen, dessen Steuerspannung mit Hilfe eines Integrators gebildet wird. Die Dauer der Beschleunigungs- und Verzögerungsphasen, die Endfrequenz sowie die Breite der Ausgangsimpulse können mit Potentiometern eingestellt werden.

Aufwendigere Steuerungen, wie sie in der Zeitschrift "Elektronik" 1988, Heft 8, Seiten 162 bis 164 beschrieben sind, verwenden Mikroprozessorsysteme, die aus Vorgaben, wie Verfahrweg, Frequenzbereich, Start-/Stoppfrequenz, unter Berücksichtigung von externen Abbruchbedingungen ein geeignetes Frequenzzeitprofil erzeugen.

Aus dem Dokument DE-A-26 25 397 ist eine Schrittmotorsteuerung für Röntgenuntersuchungsgeräte bekannt, mit welcher der für Schrittmotoren erforderliche Frequenzzeitverlauf der Steuerimpulse erzeugt werden kann. Während der Start- und Stopp-Phase werden die Steuerimpulse einem Festwertspeicher entnommen, der von einem Taktimpulse aufsummierenden Zähler als Adressengenerator angesteuert wird.

Nach dem Dokument DE-B-27 21 240 werden die Steuerimpulse eines Schrittmotors mittels eines programmierbaren Frequenzteilers erzeugt, dessen Teilerverhältnis in Abhängigkeit des Standes eines Zählers gesteuert ist. Zum Erzeugen eines nichtlinearen Frequenzzeitverlaufs ist zwischen den Zähler und den Steuereingang des programmierbaren Frequenzteilers ein Festwertspeicher geschaltet.

Der vorliegenden Erfindung liegt die Aufgabe zugrunde, ein Verfahren und eine Anordnung zum Erzeugen von Steuerimpulsen für Schrittmotoren anzugeben, welche für die im praktischen Betrieb auftretenden Bedingungen Frequenzzeitprofile der Steuerimpulse erzeugen, bei denen jeder Steuerimpuls verarbeitet wird.

Erfindungsgemäß wird diese Aufgabe mit den im kennzeichnenden Teil des Anspruchs 1 angegebenen Maßnahmen gelöst.

Ausgestaltungen und Weiterbildungen der Erfindung sind in den Unteransprüchen angegeben.

Anhand der Zeichnungen werden im folgenden die Erfindung sowie Weiterbildungen und Vorteile näher beschrieben und erläutert.

Figur 1 veranschaulicht den prinzipiellen Aufbau einer Positioniereinheit mit einem Schrittmotor.
In Figur 2 ist das Prinzipschaltbild eines in der Einheit nach Figur 1 eingesetzten Impulserzeugers dargestellt.
Figur 3 zeigt ein Frequenzzeitdiagramm der mit der Anordnung nach Figur 2 erzeugten Impulse.

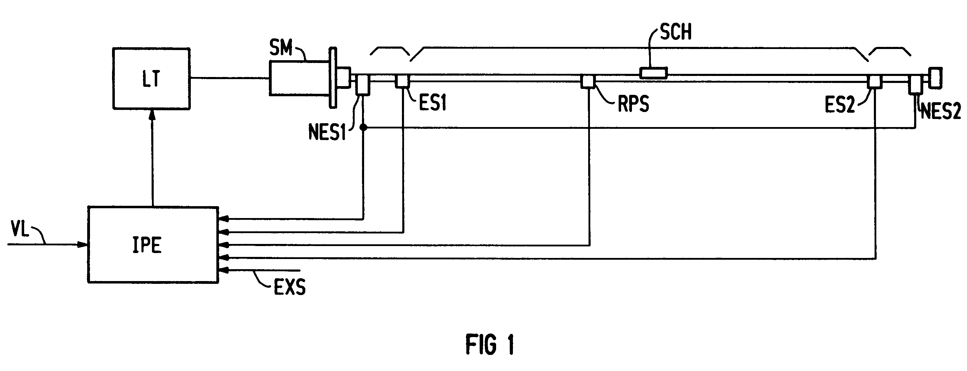

In Figur 1 ist mit SM ein Schrittmotor bezeichnet, der als Stellglied einen Schlitten SCH mittels einer Spindel oder eines Zahnriemens antreibt. Der Schrittmotor kann auch ein Linearmotor sein. An den Enden seines Verfahrbereichs befinden sich Endschalter ES1, ES2. Kurz vor den Anschlägen des Schlittens sind Notendschalter NES1, NES2 angebracht. Die Abstände zwischen den Endschaltern und den Notendschaltern sind mindestens so groß wie der Bremsweg des Schlittens SCH.

Ein Referenzpunktschalter RPS gibt ein Signal ab, wenn der Schlitten SCH an ihm vorbeigeführt wird. Mit diesem Impuls kann die Schlittenposition kalibriert werden. Hierzu können aber auch die Signale der Endschalter ES1, ES2 oder auch die der Notendschalter NES1, NES2 verwendet werden.

Der Schrittmotor SM wird von einem Leistungsteil LT gespeist, das an eine Einheit IPE zum Erzeugen von Steuerimpulsen für Schrittmotoren angeschlossen ist.

Der Impulserzeugereinheit IPE werden die Signale der Endschalter ES1, ES2 und der Notendschalter NES1, NES2 sowie des Referenzpunktschalters RPS zugeführt. Ferner kann ihr über eine Leitung EXS ein externes Stoppsignal zugeführt werden. Sie erhält ferner über Leitungen VL Vorgaben zur Impulserzeugung, wie maximale Geschwindigkeit, Betriebsart, Start-/Stoppfrequenz, Beschleunigung und Verzögerung des Schrittmotors und selbstverständlich die Verfahrstrecke.

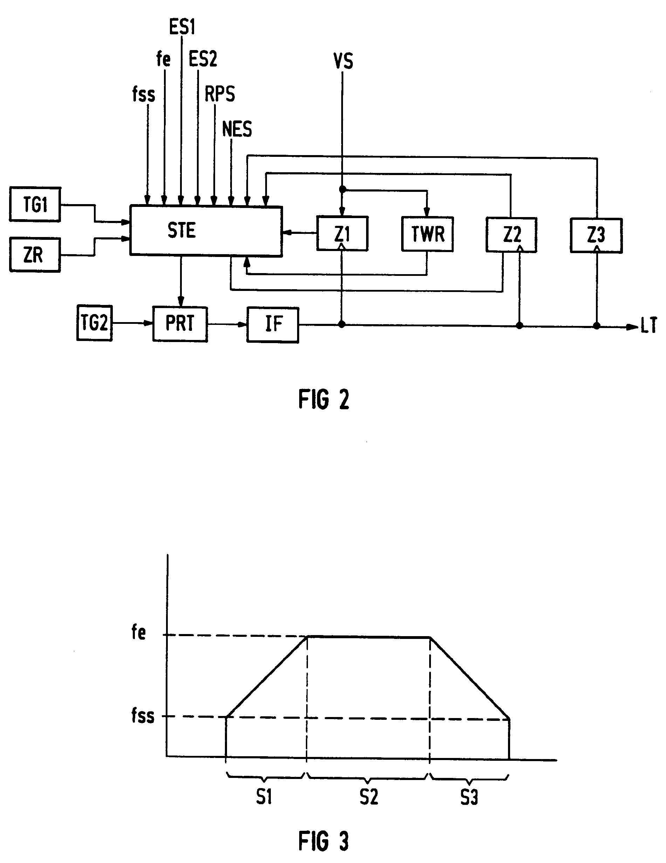

Figur 2 zeigt Einzelheiten der Impulserzeugereinheit IPE. Sie enthält eine Steuereinheit STE, der die Signale der Endschalter ES1, ES2, Notendschalter NES1, NES2 und des Referenzpunktschalters RPS zugeführt sind. Aus weiteren ihr zugeführten Signalen erzeugt sie digitale Frequenzwerte, mit denen ein programmierbarer Frequenzteiler PRT gesteuert wird, der die Ausgangsimpulse eines Taktgebers TG2 untersetzt. Seine Ausgangsimpulse werden einem Impulsformer IF zugeführt, der sie in eine für die Ansteuerung des Leistungsteils LT (Figur 1) geeignete Form bringt. An den Ausgang des Impulsformers IF ist ferner eine Zähleranordnung angeschlossen, die auch unmittelbar mit dem Ausgang des programmierbaren Teilers PRT verbunden sein kann.

Figur 3 zeigt ein typisches Frequenzzeitprofil der Steuerimpulse eines Schrittmotors. Mit dem Start springt die Frequenz von Null auf eine Start-/Stoppfrequenz fss und steigt dann während einer Beschleunigungsphase S1 bis zu einer der Endgeschwindigkeit des Schrittmotors entsprechenden Endfrequenz fe. In einer Phase S2 wird die Frequenz konstantgehalten, und in einer Bremsphase S3 sinkt die Frequenz wieder mit dem gleichen Steigungsbetrag wie in der Beschleunigungsphase S1, nur mit negativem Vorzeichen, auf die Start-/Stoppfrequenz fss und geht dann auf Null. Die Fläche des Frequenzzeitprofils entspricht der Verfahrstrecke des Stellgliedes, im Ausführungsbeispiel nach Figur 1 des Schlittens SCH.

Beim Start eines Verfahrvorganges gibt die Steuereinheit STE einen die Startfrequenz angebenden Frequenzwert auf den Steuereingang des programmierbaren Frequenzteilers PRT, so daß dieser die Frequenz des Taktgebers TG2 so untersetzt, daß seine Ausgangsimpulse die für den Schrittmotor geeignete Startfrequenz haben. Nach dem Start wird der Frequenzwert mit den Impulsen eines Taktgebers TG1 in der Steuereinheit STE inkrementiert, so daß das Untersetzungsverhältnis des programmierbaren Teilers PRT und damit dessen Ausgangsfrequenz schrittweise mit den Impulsen des Taktgebers TG1 erhöht wird. Die Ausgangsimpulse des Impulsformers IF werden einem Restwegzähler Z1 zugeführt, der vor dem Start mit der Verfahrstrecke voreingestellt wurde und dessen Stand mit den Ausgangsimpulsen des programmierbaren Teilers PRT dekrementiert wird, so daß sein jeweiliger Stand die noch zu verfahrende Strecke, also den Restweg, angibt. Ein Rampenzähler Z2 summiert die Ausgangsimpulse des programmierbaren Teilers PRT während der Beschleunigungsphase S1 auf, also bis der durch Inkrementieren der Impulse des Taktgebers TG1 gebildete Frequenzwert einen dem Endwert der Verfahrgeschwindigkeit entsprechenden Wert erreicht. Danach wird der Rampenzähler Z2 gesperrt, und das Inkrementieren der Impulse des Taktgebers TG1 wird gestoppt. Der den Frequenzteiler PRT steuernde Frequenzwert bleibt konstant, und der Schrittmotor dreht sich mit seiner Nenndrehzahl, die selbstverständlich entsprechend dem jeweiligen Anwendungsfall eingestellt wird. Hierzu kann die Frequenz des Taktgebers TG2 verwendet werden, oder es kann auch dem programmierbaren Teiler ein weiterer einstellbarer Teiler nachgeschaltet sein. Eine Änderung der Frequenz muß auch im Impulsformer IF berücksichtigt werden.

Die im Rampenzähler Z2 stehende Impulszahl entspricht der Verfahrstrecke, die während der Beschleunigungsphase S1 zurückgelegt wird, sie wird daher im folgenden Beschleunigungsphasen-Impulszahl genannt. Die Beschleunigungsphase dauert um so länger, je niedriger die Frequenz des Taktgebers TG1, also die Beschleunigung, ist und je höher die vorgegebene maximale Geschwindigkeit ist.

Wird der Stand des Restwegzählers Z1 gleich der im Rampenzähler Z2 enthaltenen Impulszahl, wird die Verzögerungsphase eingeleitet, in welcher der Frequenzwert mit den Impulsen des Taktgebers TG1 und der Stand des Rampenzählers Z2 mit den Impulsen des Impulsformers IF dekrementiert werden. Erreicht der Rampenzähler Z2 den Stand Null, wird der Ausgangswert der Steuereinheit STE auf Null gestellt. Da der Rampenzähler Z2 und der Restwegzähler Z1 in der Verzögerungsphase S3 von demselben Wert ausgehend mit denselben Impulsen dekrementiert werden, kann der Ausgangswert der Steuereinheit STE auch dann auf Null gestellt werden, wenn der Restwegzähler Z1 den Stand Null erreicht. Damit ist sichergestellt, daß die Verfahrstrecke exakt gleich der vorgegebenen Strecke ist.

Die bisher beschriebene Anordnung kann das Frequenzzeitprofil nach Figur 3 mit den drei Phasen S1, S2, S3 nur dann einhalten, wenn die Verfahrstrecke größer als die Summe von Beschleunigungs- und Verzögerungsstrecke ist. Ware die Verfahrstrecke kleiner als diese Summe, würde die Phase S2 verschwinden, und das Stellglied müßte einen plötzlichen Wechsel von Beschleunigung auf Verzögern ausführen, wobei Steuerimpulse "verlorengehen" könnten. Um dies zu vermeiden, ist ein Teilwegregister TWR vorgesehen, in das ein Verfahrweg eingetragen wird, der kleiner, z. B. drei Achtel des gesamten Verfahrweges, ist. Mit diesem Wert wird der Stand des Rampenzählers Z2 verglichen. Erreicht dieser den Inhalt des Teilwegregisters TWR, ohne daß die Nenngeschwindigkeit erreicht ist, wird die Beschleunigungsphase abgebrochen und mit der dabei erreichten Geschwindigkeit bzw. Frequenz weiter verfahren. Es steht dann noch ein genügend großer Restweg zur Verfügung, damit die Phasen S2 und S3 realisiert werden können. Die Verzögerungsphase wird gestartet, wenn der Restweg gleich dem Inhalt des Teilwegregisters TWR bzw. gleich dem Stand des Rampenzählers Z2 ist. Es werden dann wieder der von der Steuereinheit STE ausgegebene Frequenzwert und der Stand des Rampenzählers Z2 dekrementiert. Erreicht der letztere den Wert Null, wird die Verzögerungsphase beendet und der Frequenzwert auf Null gesetzt.

Das Frequenzzeitprofil mit den drei Phasen S1, S2, S3 (Figur 3) muß auch dann eingehalten werden, wenn der Verfahrvorgang an einer beliebigen Stelle abgebrochen werden muß, z. B. wenn einer der Endschalter ES1, ES2 anspricht, oder wenn ein anderes Abbruchkriterium, z. B. ein externes Stoppsignal, anliegt. Damit auch nach Auftreten solcher Abbruchsignale ein zulässiges Frequenzzeitprofil eingehalten wird, ist in der Zähleranordnung ein Plateauzähler Z3 enthalten, der die Ausgangsimpulse des programmierbaren Frequenzteilers PRT während der Phase S2 aufsummiert. Tritt ein Abbruchsignal in der Beschleunigungsphase S1 auf, dann wird das Inkrementieren der Impulse des Taktgebers TG1 gestoppt. Der Rampenzähler Z2 summiert noch die Steuerimpulse bis zum Auftreten des nächsten Impulses des Taktgebers TG1 auf und wird dann auch gestoppt. Danach wird der Plateauzähler Z3 freigegeben, und sein Stand wird mit dem des Rampenzählers verglichen. Werden beide Zählerstände gleich, wird die Verzögerungsphase S3 gestartet, in der der Rampenzähler Z2 dekrementiert wird. Mit Erreichen des Zählerstandes Null wird der Verfahrvorgang beendet. Der im Restwegzähler Z1 enthaltene Wert wird als Restweg gespeichert und kann von einer übergeordneten Steuerung abgerufen werden. Damit die Phase S2 nach Auftreten eines Abbruchsignals nicht zu lange dauert, was z. B. bei einer niedrigen Frequenz der Steuerimpulse der Fall sein kann, enthält die Steuereinheit STE eine Zeitüberwachung, die nach Ablauf einer vorgegebenen, in einem Register ZR enthaltenen Zeit unabhängig vom Stand des Rampenzählers Z2 die Verzögerungsphase S3 einleitet.

Tritt in der Phase S2 konstanter Frequenz ein Abbruchsignal auf, so wird die Phase S2 sofort beendet, wenn der Stand des Plateauzählers Z3 größer oder gleich dem des Rampenzählers Z2 ist. Hat der Stand des Plateauzählers zum Zeitpunkt des Abbruchsignals den des Rampenzählers Z2 noch nicht erreicht, wird die Gleichheit der beiden Zählerstände abgewartet, bis die Verzögerungsphase S3 begonnen wird. Damit die Phase S2 konstanter Frequenz nicht zu lange dauert, wird die Verzögerungsphase unabhängig vom Stand des Plateauzählers Z3 eingeleitet, wenn die Dauer der Phase S2 gleich der im Register ZR eingestellten Höchstdauer ist. In der Verzögerungsphase werden wieder der den programmierbaren Frequenzteiler PRT steuernde Frequenzwert und die Zähler Z1, Z2 dekrementiert. Die Verzögerungsphase wird beendet, wenn der Rampenzähler Z2 den Wert Null erreicht. Der im Restwegzähler Z1 enthaltene Wert kann als Restweg einer übergeordneten Steuerung mitgeteilt werden.

Tritt ein Abbruchsignal in der Verzögerungsphase S3 auf, so hat dies keinen Einfluß mehr auf das Frequenzzeitprofil, da der Verfahrvorgang bereits mit der eingestellten Verzögerung beendet wird.

Für die Phase S2 kann eine Mindestdauer vorgesehen sein, damit auch dann, wenn unmittelbar nach dem Start ein Abbruchsignal auftritt, die Phase S2 konstanter Frequenz ausreichend lang ist.

Bei Abbruch des Verfahrprofils durch einen der beiden Notendschalter wird die Impulsausgabe abrupt beendet, unabhängig davon, in welcher der drei Phasen das Abbruchsignal auftritt. Eine Verzögerungsrampe (S3) wird nicht generiert.

## Patentansprüche

1. Verfahren zum Erzeugen von Steuerimpulsen für Schrittmotoren zum Verfahren eines Stellgliedes um eine vorgegebene Verfahrstrecke, bei dem
- die Frequenz der Steuerimpulse während einer Startphase (S1) von einer Startfrequenz (fss) hochläuft, während einer Phase (S2) konstanter Verfahrgeschwindigkeit die am Ende der Startphase erreichte Frequenz beibehalten wird und in einer Stopphase (S3) auf eine Stoppfrequenz (fss) zurückgeht und von dieser auf Null springt,
- die Verfahrstrecke als Impulszahl vorgegeben wird, die mit den Steuerimpulsen zu einer Restweg-Impulszahl dekrementiert wird;
- während der Startphase (S1) die Steuerimpulse aufsummiert werden;
- die Frequenz der Steuerimpulse in Abhängigkeit von Frequenzwerten erzeugt wird, die während der Startphase (S1), ausgehend von einem der Startfrequenz (fss) entsprechenden Wert, durch Inkrementieren von Taktimpulsen gebildet werden;
- die Startphase beendet, das Aufsummieren der Taktimpulse gestoppt und die mit dem Inkrementieren der Steuerimpulse erreichte Startphasen-Impulszahl gespeichert wird, wenn der Frequenzwert erreicht wird, welcher der maximalen Verfahrgeschwindigkeit entspricht;
- während der Phase (S2) konstanter Geschwindigkeit die Steuerimpulse mit dem der maximalen Verfahrgeschwindigkeit entsprechenden Frequenzwert erzeugt werden und,
- wenn die Restweg-Impulszahl gleich der Startphasen-Impulszahl wird, die Stopp-Phase (S3) eingeleitet wird, in welcher der Frequenzwert mit den Taktimpulsen bis zur Stoppfrequenz dekrementiert wird und der Frequenzwert Null ausgegeben wird, wenn der Restweg Null ist,
**dadurch gekennzeichnet**, daß eine Teilweg-Impulszahl gebildet und gespeichert wird, die kleiner als die Hälfte, vorzugsweise gleich drei Achtel der der gesamten Verfahrstrecke entsprechenden Impulszahl ist, und daß die jeweilige Startphasen-Impulszahl mit der gespeicherten Teilweg-Impulszahl verglichen wird und bei Gleichheit die Startphase (S1) abgebrochen wird.

2. Verfahren zum Erzeugen von Steuerimpulsen für Schrittmotoren zum Verfahren eines Stellgliedes um eine vorgegebene Verfahrstrecke, bei dem
- die Frequenz der Steuerimpulse während einer Startphase (S1) von einer Startfrequenz (fss) hochläuft, während einer Phase (S2) konstanter Verfahrgeschwindigkeit die am Ende der Startphase erreichte Frequenz beibehalten wird und in einer Stopphase (S3) auf eine Stoppfrequenz (fss) zurückgeht und von dieser auf Null springt,
- die Verfahrstrecke als Impulszahl vorgegeben wird, die mit den Steuerimpulsen zu einer Restweg-Impulszahl dekrementiert wird;
- während der Startphase (S1) die Steuerimpulse aufsummiert werden;
- die Frequenz der Steuerimpulse in Abhängigkeit von Frequenzwerten erzeugt wird, die während der Startphase (S1), ausgehend von einem der Startfrequenz (fss) entsprechenden Wert, durch Inkrementieren von Taktimpulsen gebildet werden;
- die Startphase beendet, das Aufsummieren der Taktimpulse gestoppt und die mit dem Inkrementieren der Steuerimpulse erreichte Startphasen-Impulszahl gespeichert wird, wenn der Frequenzwert erreicht wird, welcher der maximalen Verfahrgeschwindigkeit entspricht;
- während der Phase (S2) konstanter Geschwindigkeit werden die Steuerimpulse mit dem der maximalen Verfahrgeschwindigkeit entsprechenden Frequenzwert erzeugt werden und
- wenn die Restweg-Impulszahl gleich der Startphasen-Impulszahl wird, die Stopp-Phase (S3) eingeleitet wird, in welcher der Frequenzwert mit den Taktimpulsen bis zur Stoppfrequenz dekrementiert wird und der Frequenzwert Null ausgegeben wird, wenn der Restweg Null ist,
**dadurch gekennzeichnet**,
daß, wenn während der Startphase (S1) ein Abbruchsignal auftritt, die Startphase (S1) abgebrochen wird, daß in der folgenden Phase (S2) konstanter Frequenz die Steuerimpulse aufsummiert werden, bis die Summe gleich der in der Startphase (S1) erreichten Impulszahl ist, und dann die Stopp-Phase (S3) eingeleitet wird.

3. Verfahren zum Erzeugen von Steuerimpulsen für Schrittmotoren zum Verfahren eines Stellgliedes um eine vorgegebene Verfahrstrecke, bei dem
- die Frequenz der Steuerimpulse während einer Startphase (S1) von einer Startfrequenz (fss) hochläuft, während einer Phase (S2) konstanter Verfahrgeschwindigkeit die am Ende der Startphase erreichte Frequenz beibehalten wird und in einer Stopphase (S3) auf eine Stoppfrequenz (fss) zurückgeht und von dieser auf Null springt,
- die Verfahrstrecke als Impulszahl vorgegeben wird, die mit den Steuerimpulsen zu einer Restweg-Impulszahl dekrementiert wird;
- während der Startphase (S1) die Steuerimpulse aufsummiert werden;
- die Frequenz der Steuerimpulse in Abhängigkeit von Frequenzwerten erzeugt wird, die während der Startphase (S1), ausgehend von einem der Startfrequenz (fss) entsprechenden Wert, durch Inkrementieren von Taktimpulsen gebildet werden;
- die Startphase beendet, das Aufsummieren der Taktimpulse gestoppt und die mit dem Inkrementieren der Steuerimpulse erreichte Startphasen-Impulszahl gespeichert wird, wenn der Frequenzwert erreicht wird, welcher der maximalen Verfahrgeschwindigkeit entspricht;
- während der Phase (S2) konstanter Geschwindigkeit werden die Steuerimpulse mit dem der maximalen Verfahrgeschwindigkeit entsprechenden Frequenzwert erzeugt werden und
- wenn die Restweg-Impulszahl gleich der Startphasen-Impulszahl wird, die Stopp-Phase (S3) eingeleitet wird, in welcher der Frequenzwert mit den Taktimpulsen bis zur Stoppfrequenz dekrementiert wird und der Frequenzwert Null ausgegeben wird, wenn der Restweg Null ist,
**dadurch gekennzeichnet**, daß in der Phase (S2) konstanter Verfahrgeschwindigkeit die Steuerimpulse gezählt werden, daß, wenn während dieser Phase ein Abbruchsignal auftritt, die Stopp-Phase (S3) eingeleitet wird, wenn die in der Phase (S2) konstanter Verfahrgeschwindigkeit erreichte Impulszahl gleich oder größer als die Startphasen-Impulszahl ist.

4. Verfahren nach Anspruch 2 oder 3, **dadurch gekennzeichnet**, daß die Stopp-Phase eingeleitet wird, wenn die Dauer der Phase (S2) konstanter Verfahrgeschwindigkeit größer als eine vorgegebene Zeit ist.

5. Verfahren nach einem der Ansprüche 1 bis 4, **dadurch gekennzeichnet**, daß in der Stopp-Phase (S3) die Startphasen-Impulszahl dekrementiert wird und bei Erreichen der Impulszahl Null der Frequenzwert Null ausgegeben wird.

6. Anordnung zum Erzeugen von Steuerimpulsen für Schrittmotoren zum Verfahren eines Stellgliedes um eine vorgegebene Verfahrstrecke nach einer Frequenzkennlinie, nach der die Frequenz der Steuerimpulse während einer Startphase (S1) von einer Startfrequenz (fss) hochläuft, während einer Phase (S2) konstanter Verfahrgeschwindigkeit die am Ende der Startphase erreichte Frequenz beibehalten wird und in einer Stopp-Phase (S3) auf eine Stoppfrequenz (fss) zurückgeht und von dieser auf Null springt,
- mit einer Steuereinheit, der als Vorgabewert die Start-/ Stoppfrequenz (fss), die der maximalen Verfahrgeschwindigkeit entsprechende Frequenz (fe) und Taktimpulse eines Taktgebers (TG1) zugeführt sind, die eine Zähleinrichtung zum Erzeugen von Frequenzwerten enthält, deren Zähleingang an den Taktgeber (TG1) angeschlossen ist und deren Ausgangsfrequenz die der Steuerimpulse ist,
- mit einen Restwegzähler (Z1), der vor Beginn eines Verfahrvorganges mit einer der Verfahrstrecke entsprechenden Impulszahl voreingestellt und dessen Stand mit den Steuerimpulsen dekrementiert wird und
- mit einem Rampenzähler (Z2), der während der Startphase die Steuerimpulse aufsummiert, während der Phase konstanter Verfahrgeschwindigkeit von der Steuereinheit gesperrt ist, dessen Stand während der Stopp-Phase dekrementiert wird und der bei Erreichen des Zählerstandes Null der Steuereinheit (STE) ein Meldesignal zuführt, das die Ausgabe des Frequenzwertes Null bewirkt, **gekennzeichnet durch**
ein Teilwegregister (TWR), in das eine Impulszahl eingetragen ist, die einem Verfahrweg entspricht, der kleiner als die Hälfte der gesamten Verfahrstrecke, vorzugsweise gleich drei Achtel der gesamten Verfahrstrecke, ist und dessen Inhalt mit dem Stand des Rampenzählers (Z2) verglichen wird, wobei bei Gleichheit ein Signal erzeugt wird, welches das Inkrementieren der Impulse des Taktgebers (TG1) in der Steuereinheit (STE) und das Aufsummieren der Steuerimpulse im Rampenzähler (Z2) sperrt.

7. Anordnung zum Erzeugen von Steuerimpulsen für Schrittmotoren zum Verfahren eines Stellgliedes um eine vorgegebene Verfahrstrecke nach einer Frequenzkennlinie, nach der die Frequenz der Steuerimpulse während einer Startphase (S1) von einer Startfrequenz (fss) hochläuft, während einer Phase (S2) konstanter Verfahrgeschwindigkeit die am Ende der Startphase erreichte Frequenz beibehalten wird und in einer Stopp-Phase (S3) auf eine Stoppfrequenz (fss) zurückgeht und von dieser auf Null springt,
- mit einer Steuereinheit, der als Vorgabewert die Start-/ Stoppfrequenz (fss), die der maximalen Verfahrgeschwindigkeit entsprechende Frequenz (fe) und Taktimpulse eines Taktgebers (TG1) zugeführt sind, die eine Zähleinrichtung zum Erzeugen von Frequenzwerten enthält, deren Zähleingang an den Taktgeber (TG1) angeschlossen ist und deren Ausgangsfrequenz die der Steuerimpulse ist,
- mit einen Restwegzähler (Z1), der vor Beginn eines Verfahrvorganges mit einer der Verfahrstrecke entsprechenden Impulszahl voreingestellt und dessen Stand mit den Steuerimpulsen dekrementiert wird und
- mit einem Rampenzähler (Z2), der während der Startphase die Steuerimpulse aufsummiert, während der Phase konstanter Verfahrgeschwindigkeit von der Steuereinheit gesperrt ist, dessen Stand während der Stopp-Phase dekrementiert wird und der bei Erreichen des Zählerstandes Null der Steuereinheit (STE) ein Meldesignal zuführt, das die Ausgabe des Frequenzwertes Null be
wird, **gekennzeichnet durch**
einen Plateauzähler (Z3), der während der Phase (S2) konstanter Verfahrgeschwindigkeit die Steuerimpulse aufsummiert und dessen Stand mit dem des Rampenzählers verglichen wird, derart, daß im Falle eines Abbruchsignals der Stand des Rampenzählers (Z2) von den Steuerimpulsen und die Frequenzwerte mit den Impulsen des Taktgebers (TG1) dekrementiert werden, wenn der Stand des Plateauzählers gleich oder größer als der des Rampenzählers ist.

8. Anordnung nach Anspruch 6 oder 7, **gekennzeichnet durch** eine Zeitüberwachungsschaltung, die bei Auftreten eines Abbruchsignals nach einer vorgegebenen Zeit die Phase konstanter Verfahrgeschwindigkeit beendet und die Stopp-Phase einleitet.

## Claims

1. A method of generating control pulses for stepping motors in order to move a fine control element by a predetermined travel distance, wherein
- during a start phase (S1) the frequency of the control pulses increases from a start frequency (fss), during a phase (S2) of constant travel velocity the frequency reached at the end of the start phase is maintained, and in a stop phase (S3) the frequency returns to a stop frequency (fss) and from the latter jumps to zero,
- the travel distance is preset in the form of a pulse count which is decremented with the control pulses to a residual distance pulse count;
- during the start phase (S1) the control pulses are added;
- the frequency of the control pulses is generated in dependence upon frequency values which are formed during the start phase (S1), commencing from a value corresponding to the start frequency (fss), by incrementation of clock pulses;
- the start phase is ended, the addition of the clock pulses is stopped and the start phase pulse count reached by the incrementation of the control pulses is stored when the frequency value corresponding to the maximum travel velocity is reached;
- during the phase (S2) of constant velocity the control pulses are generated with the frequency value corresponding to the maximum travel velocity and
- when the residual distance pulse number becomes equal to the start phase pulse count, the stop phase (S3) is initiated in which the frequency value is decremented with the clock pulses to the stop frequency and the frequency value zero is output when the residual distance is zero, characterised in that a partial distance pulse count is formed and stored which is smaller than half of, and preferably equal to three eighths of, the pulse count corresponding to the total travel distance, and that the respective start phase pulse count is compared with the stored partial distance pulse count and in the event of equality the start phase (S1) is terminated.

2. A method of generating control pulses for stepping motors in order to move a fine control element by a predetermined travel distance, wherein
- during a start phase (S1) the frequency of the control pulses increases from a start frequency (fss), during a phase (S2) of constant travel velocity the frequency reached at the end of the start phase is maintained, and in a stop phase (S3) the frequency returns to a stop frequency (fss) and from the latter jumps to zero,
- the travel distance is preset in the form of a pulse count which is decremented with the control pulses to a residual distance pulse count;
- during the start phase (S1) the control pulses are added;
- the frequency of the control pulses is generated in dependence upon frequency values which are formed during the start phase (S1), commencing from a value corresponding to the start frequency (fss), by incrementation of clock pulses;
- the start phase is ended, the addition of the clock pulses is stopped and the start phase pulse count reached by the incrementation of the control pulses is stored when the frequency value corresponding to the maximum travel velocity is reached;
- during the phase (S2) of constant velocity the control pulses are generated with the frequency value corresponding to the maximum travel velocity and
- when the residual distance pulse count becomes equal to the start phase pulse count the stop phase (S3) is initiated in which the frequency value is decremented with the clock pulses to the stop frequency and the frequency value of zero is output when the residual distance is zero, characterised in that when a terminate signal occurs during the start phase (S1) the start phase (S1) is terminated, that in the following phase (S2) of constant frequency the control pulses are added until the sum is equal to the pulse count reached in the start phase (S1) and then the stop phase (S3) is initiated.

3. A method of generating control pulses for stepping motors in order to move a fine control element by a predetermined travel distance, wherein
- during a start phase (S1) the frequency of the control pulses increases from a start frequency (fss), during a phase (S2) of constant travel velocity the frequency reached at the end of the start phase is maintained, and in a stop phase (S3) the frequency returns to a stop frequency (fss) and jumps from the latter to zero,
- the travel distance is preset in the form of a pulse count which is decremented with the control pulses to a residual distance pulse count;
- during the start phase (S1) the control pulses are added;
- the frequency of the control pulses is generated in dependence upon frequency values which are formed during the start phase (S1), commencing from a value corresponding to the start frequency (fss), by incrementation of clock pulses;
- the start phase is ended, the addition of the clock pulses is stopped, and the start phase pulse count reached by the incrementation of the control pulses is stored when the frequency value corresponding to the maximum travel velocity is reached;
- during the phase (S2) of constant velocity the control pulses are generated with the frequency value corresponding to the maximum travel velocity and
- when the residual distance pulse count becomes equal to the start phase pulse count the stop phase (S3) is initiated in which the frequency value is decremented with the clock pulses to the stop frequency and the frequency value of zero is output when the residual distance is zero, characterised in that in the phase (S2) of constant travel velocity the control pulses are counted, when during this phase a terminate signal occurs the stop phase (S3) is initiated when the pulse count reached in the phase (S2) of constant travel velocity is equal to or greater than the start phase pulse count.

4. A method as claimed in Claim 2 or 3, characterised in that the stop phase is initiated when the duration of the phase (S2) of constant travel velocity is greater than a preset time.

5. A method as claimed in one of Claims 1 to 4, characterised in that in the stop phase (S3) the start phase pulse count is decremented and when the pulse count of zero is reached the frequency value zero is output.

6. An arrangement for generating control pulses for stepping motors for the movement of a fine control element by a predetermined travel distance in accordance with a frequency characteristic in accordance with which during a start phase (S1) the frequency of the control pulses increases from a start frequency (fss), during a phase (S2) of constant travel velocity the frequency reached at the end of the start phase is maintained, and in a stop phase (S3) the frequency returns to a stop frequency (fss) and from the latter jumps to zero,
- with a control unit which as preset values is supplied with the start/stop frequency (fss), the frequency (fe) corresponding to the maximum travel velocity, and clock pulses of a clock pulse generator (TG1) which contains a counting device for the generation of frequency values whose counting input is connected to the clock generator (TG1) and whose output frequency is that of the control pulses,
- with a residual distance counter (Z1) which before the start of a travel function is preset with a pulse count corresponding to the travel distance and the count of which is decremented with the control pulses and
- with a ramp counter (Z2) which during the start phase adds the control pulses, during the phase of constant travel velocity is blocked by the control unit, whose count is decremented during the stop phase and which, when the count of zero is reached, supplies the control unit (STE) with a message signal which causes the frequency value of zero to be output,
characterised by a partial distance register (TWR) into which a pulse count corresponding to a travel distance smaller than half the total travel distance, and preferably equal to three eighths of the total travel distance, is input, and the content of which is compared with the count of the ramp counter (Z2), where in the event of equality a signal is generated which inhibits the incrementation of the pulses of the clock pulse generator (TG1) in the control unit (STE) and the addition of the control pulses in the ramp counter (Z2).

7. An arrangement for generating control pulses for stepping motors for the movement of a fine control element by a predetermined travel distance in accordance with a frequency characteristic, in accordance with which during a start phase (S1) the frequency of the control pulses increases from a start frequency (fss), during a phase (S2) of constant travel velocity the frequency reached at the end of the start phase is maintained and in a stop phase (S3) the frequency returns to a stop frequency (fss) and from the latter jumps to zero,
- with a control unit which is supplied as preset values with the start/stop frequency (fss), the frequency (fe) corresponding to the maximum travel velocity, and clock pulses of a clock pulse generator (TG1) which contains a counting device for the generation of frequency values, whose counting input is connected to the clock pulse generator (TG1) and whose output frequency is that of the control pulses,
- with a residual distance counter (Z1) which before the start of a travel function is preset with a pulse count corresponding to the travel distance and whose count is decremented with the control pulses and
- with a ramp counter (Z2) which during the start phase adds the control pulses, during the phase of constant travel velocity is blocked by the control unit, whose count is decremented during the stop phase and which, when the count of zero is reached, supplies the control unit (STE) with a message signal which causes the frequency value of zero to be output,
characterised by a plateau counter (Z3) which during the phase (S2) of constant travel velocity adds the control pulses and the count of which is compared with that of the ramp counter in such manner that in the event of a terminate signal the count of the ramp counter (Z2) is decremented by the control pulses and the frequency values are decremented with the pulses of the clock pulse generator (TG1) when the count of the plateau counter is equal to or greater than that of the ramp counter.

8. An arrangement as claimed in Claim 6 or 7, characterised by a time monitoring circuit which on the occurrence of a terminate signal after a predetermined time ends the phase of constant travel velocity and initiates the stop phase.

## Revendications

1. Procédé pour produire des impulsions de commande pour des moteurs pas-à-pas pour déplacer un organe de réglage d'une distance de déplacement prédéterminée, selon lequel
- on fait croître la fréquence des impulsions de commande pendant une phase de démarrage (S1) à partir d'une fréquence de démarrage (fss), on conserve la fréquence atteinte à la fin de la phase de démarrage pendant une phase (S2) à vitesse constante de déplacement, on la fait décroître pendant une phase d'arrêt (S3), jusqu'à une fréquence d'arrêt (fss) et on la fait passer de cette fréquence à la valeur zéro,
- on prescrit la distance de déplacement sous la forme d'un nombre d'impulsions, que l'on décrémente au moyen des impulsions de commande jusqu'à un nombre d'impulsions de course résiduelle;
- pendant la phase de démarrage (S1), on additionne les impulsions de commande;
- on génère la fréquence des impulsions de commande en fonction de valeurs de fréquence, que l'on forme pendant la phase de démarrage (S1) par incrémentation d'impulsions de cadence, à partir d'une valeur correspondant à la fréquence de démarrage (fss);
- on interrompt la phase de démarrage, on arrête l'addition des impulsions de cadence et on mémorise le nombre d'impulsions de la phase de démarrage, qui est atteint au moyen de l'incrémentation des impulsions de commande, lorsqu'est atteinte la valeur de la fréquence qui correspond à la vitesse maximale de déplacement;
- on génère pendant la phase (S2) à vitesse constante, les impulsions de commande avec la valeur de fréquence qui correspond à la vitesse maximale de déplacement, et
- lorsque le nombre d'impulsions de course résiduelle devient égal au nombre d'impulsions de la phase de démarrage, on déclenche la phase d'arrêt (S3), lors de laquelle on décrémente la valeur de la fréquence jusqu'à la fréquence d'arrêt, au moyen des impulsions de cadence et on fournit la valeur de fréquence nulle lorsque la course résiduelle est nulle,
caractérisé par le fait que l'on forme et que l'on mémorise un nombre d'impulsions de course partielle, qui est inférieur à la moitié et est de préférence égal aux trois huitièmes du nombre d'impulsions correspondant à la distance totale de déplacement, on compare le nombre d'impulsions respectives de la phase de démarrage au nombre mémorisé d'impulsions de course partielle et on interrompt en cas d'égalité, la phase de démarrage (S1).

2. Procédé pour produire des impulsions de commande pour des moteurs pas-à-pas pour déplacer un organe de réglage une distance de déplacement prédéterminée, selon lequel
- on fait croître la fréquence des impulsions de commande pendant une phase de démarrage (S1) à partir d'une fréquence de démarrage (fss), on conserve la fréquence atteinte à la fin de la phase de démarrage pendant une phase (S2) à vitesse constante de déplacement on la fait décroître pendant une phase d'arrêt (S3), jusqu'à une fréquence d'arrêt (fss) et on la fait passer de cette fréquence à la valeur zéro,
- on prescrit la distance de déplacement sous la forme d'un nombre d'impulsions, que l'on décrémente au moyen des impulsions de commande jusqu'à un nombre d'impulsions de course résiduelle;
- pendant la phase de démarrage (S1), on additionne les impulsions de commande;
- on génère la fréquence des impulsions de commande en fonction de valeurs de fréquence, que l'on forme pendant la phase de démarrage (S1) par incrementation d'impulsions de cadence, à partir d'une valeur correspondant à la fréquence de démarrage (fss);
- on interrompt la phase de démarrage, on arrête l'addition des impulsions de cadence et on mémorise le nombre d'impulsions de la phase de démarrage, qui est atteint au moyen de l'incrémentation des impulsions de commande, lorsqu'est atteinte la valeur de la fréquence qui correspond à la vitesse maximale de déplacement;
- on génère pendant la phase (S2) à vitesse constante, les impulsions de commande avec la valeur de fréquence qui correspond à la vitesse maximale de déplacement, et
- lorsque le nombre d'impulsions de course résiduelle devient égal au nombre d'impulsions de la phase de démarrage, on déclenche la phase d'arrêt (S3) lors de laquelle la valeur de la fréquence est décrémentée jusqu'à la fréquence d'arrêt, au moyen des impulsions de cadence et on fournit la valeur de fréquence nulle lorsque la course résiduelle est nulle, caractérisé par le fait que, lorsqu'un signal d'interruption apparaît pendant la phase de démarrage (S1), on interrompt cette phase de démarrage (S1), on additionne pendant la phase suivante (S2) à fréquence constante, les impulsions de commande jusqu'à ce que la somme soit égale au nombre d'impulsions atteint pendant la phase de démarrage (S1), puis on déclenche la phase d'arrêt (S3).

3. Procédé pour produire des impulsions de commande pour des moteurs pas-à-pas pour déplacer un organe de réglage d'une distance de déplacement prédéterminée, selon lequel
- on fait croître la fréquence des impulsions de commande pendant une phase de démarrage (S1) à partir d'une fréquence de démarrage (fss), on conserve la fréquence atteinte à la fin de la phase de démarrage pendant une phase (S2) à vitesse constante de déplacement, on la fait décroître pendant une phase d'arrêt (S3), jusqu'à une fréquence d'arrêt (fss) et on la fait passer de cette fréquence à la valeur zéro,
- on prescrit la distance de déplacement sous la forme d'un nombre d'impulsions, que l'on décrémente au moyen des impulsions de commande jusqu'à un nombre d'impulsions de course résiduelle;
- pendant la phase de démarrage (S1), on additionne les impulsions de commande;
- on génère la fréquence des impulsions de commande en fonction de valeurs de fréquence, que l'on forme pendant la phase de démarrage (S1) par incrémentation d'impulsions de cadence, à partir d'une valeur correspondant à la fréquence de démarrage (fss);
- on interrompt la phase de démarrage, on arrête l'addition des impulsions de cadence et on mémorise le nombre d'impulsions de la phase de démarrage, qui est atteint au moyen de l'incrémentation des impulsions de commande, lorsqu'est atteinte la valeur de la fréquence qui correspond à la vitesse maximale de déplacement;
- on génère pendant la phase (S2) à vitesse constante, les impulsions de commande avec la valeur de fréquence qui correspond à la vitesse maximale de déplacement, et
- lorsque le nombre d'impulsions de course résiduelle devient égal au nombre d'impulsions de la phase de démarrage, on déclenche la phase d'arrêt (S3), lors de laquelle on décrémente la valeur de la fréquence jusqu'à la fréquence d'arrêt, au moyen des impulsions de cadence et on fournit la valeur de fréquence nulle lorsque la course résiduelle est nulle,
caractérisé par le fait que l'on compte pendant la phase (S2) à vitesse de déplacement constante, les impulsions de commande, que, lorsqu'un signal d'interruption apparaît pendant cette phase, on déclenche la phase d'arrêt (S3) lorsque le nombre d'impulsions atteint pendant la phase (S2) à vitesse constante de déplacement est supérieur ou égal au nombre d'impulsions de la phase de démarrage.

4. Procédé suivant la revendication 2 ou 3, caractérisé par le fait que l'on déclenche la phase d'arrêt lorsque la durée de la phase (S2) à vitesse de déplacement constante est supérieure à une durée prédéterminée.

5. Procédé suivant l'une des revendications 1 à 4, caractérisé par le fait que l'on décrémente, pendant la phase d'arrêt (S3), le nombre d'impulsions de la phase de démarrage et, lorsque le nombre d'impulsions zéro est atteint, on fournit la valeur de fréquence zéro.

6. Dispositif pour produire des impulsions de commande pour des moteurs pas-à-pas pour déplacer un organe de réglage d'une distance de déplacement prédéterminée, suivant une courbe caractéristique de fréquence, selon laquelle la fréquence des impulsions de commande croît à partir d'une fréquence de démarrage (fss) pendant une phase de démarrage (S1), la fréquence atteinte à la fin de la phase de démarrage est conservée pendant une phase (S2) à vitesse constante de déplacement, décroît à une fréquence d'arrêt (fss) pendant une phase d'arrêt (S3) et passe de cette fréquence à la valeur zéro, comportant
- une unité de commande, à laquelle sont envoyées, en tant que valeurs de prédétermination, la fréquence de démarrage/d'arrêt (fss), la fréquence (fe) qui correspond à la vitesse maximale de déplacement, et des impulsions de cadence d'un générateur de cadence (TG1), et qui contient un dispositif de comptage, qui sert à produire des valeurs de fréquence, dont l'entrée de comptage est raccordée au générateur de cadence (TG1) et dont la fréquence de sortie est celle des impulsions de commande,
- un compteur de course résiduelle (Z1), qui est préréglé, avant le début d'une opération de déplacement, sur un nombre d'impulsions correspondant à la distance de déplacement et dont l'état est décrémenté au moyen des impulsions de commande, et
- un compteur pour rampe (Z2), qui additionne les impulsions de commande pendant la phase de démarrage, qui est bloqué par l'unité de commande pendant la phase à vitesse constante de déplacement, dont l'état est décrémenté pendant la phase d'arrêt et qui, lorsque l'état de comptage zéro de l'unité de commande (STE) est atteint, envoie un signal de signalisation, qui provoque la délivrance de la valeur de fréquence zéro;
caractérisé par un registre de course partielle (TWR), dans lequel est introduit un nombre d'impulsions qui correspond à une distance de déplacement inférieure à la moitié de la distance totale de déplacement, et de préférence égale aux trois huitièmes de la distance totale de déplacement, et dont le contenu est comparé à l'état du compteur pour rampe (Z2), un signal étant produit en cas d'égalité, lequel bloque l'incrémentation des impulsions du générateur de cadence (TG1) situé dans l'unité de commande (STE) et bloque l'addition des impulsions de commande dans le compteur pour rampe (Z2).

7. Dispositif pour produire des impulsions de commande pour des moteurs pas-à-pas pour déplacer un organe de réglage d'une distance de déplacement prédéterminée, suivant une courbe caractéristique de fréquence, selon laquelle la fréquence des impulsions de commande croît à partir d'une fréquence de démarrage (fss) pendant une phase de démarrage (S1), la fréquence atteinte à la fin de la phase de démarrage est conservée pendant une phase (S2) à vitesse constante de déplacement, décroît à une fréquence d'arrêt (fss) pendant une phase d'arrêt (S3) et passe de cette fréquence à la valeur zéro, comportant
- une unité de commande, à laquelle sont envoyées, en tant que valeurs de prédétermination, la fréquence de démarrage/d'arrêt (fss), la fréquence (fe) qui correspond à la vitesse maximale de déplacement, et des impulsions de cadence d'un générateur de cadence (TG1), et qui contient un dispositif de comptage, qui sert à produire des valeurs de fréquence, dont l'entrée de comptage est raccordée au générateur de cadence (TG1) et dont la fréquence de sortie est celle des impulsions de commande,
- un compteur de course résiduelle (Z1), qui est préréglé, avant le début d'une opération de déplacement, sur un nombre d'impulsions correspondant à la distance de déplacement et dont l'état est décrémenté au moyen des impulsions de commande, et
- un compteur pour rampe (Z2), qui additionne les impulsions de commande pendant la phase de démarrage, qui est bloqué par l'unité de commande pendant la phase à vitesse constante de déplacement, dont l'état est décrémenté pendant la phase d'arrêt et qui, lorsque l'état de comptage zéro de l'unité de commande (STE) est atteint, envoie un signal de signalisation, qui provoque la délivrance de la valeur de fréquence zéro;
caractérisé par un compteur pour palier (Z3), qui additionne les impulsions de commande pendant la phase (S2) à vitesse de déplacement constante et dont l'état est comparé à celui du compteur pour rampe, de sorte que, dans le cas d'un signal d'interruption, l'état du compteur pour rampe (Z2) est décrémenté par les impulsions de commande, et les valeurs de fréquence sont décrémentées au moyen des impulsions du générateur de cadence (TG1), lorsque l'état du compteur pour palier est supérieur ou égal à celui du compteur pour rampe.

8. Dispositif suivant la revendication 6 ou 7, caractérisé par un circuit de contrôle de temps, qui, lors de l'apparition d'un signal d'interruption, arrête la phase à vitesse de déplacement constante au bout d'une durée prédéterminée, et déclenche la phase d'arrêt.
